# EUROPÄISCHE PATENTSCHRIFT

(11) **EP 1 117 311 B1**
(45) Veröffentlichungstag und Bekanntmachung des Hinweises auf die Patenterteilung: **21.01.2004**
(21) Anmeldenummer: 99946005.8
(22) Anmeldetag: 21.08.1999
(51) Int. Cl.: A45C 5/14, B60B 33/04

(54) **ROLLENANORDNUNG**
ROLLER ARRANGEMENT
ENSEMBLE ROULETTE

(30) Priorität: 01.10.1998 DE 19845236
(43) Veröffentlichungstag der Anmeldung: 25.07.2001
(73) Patentinhaber: Thomas Wagner GmbH, 82377 Penzberg (DE)
(72) Erfinder: WAGNER, Thomas, D-82393 Iffeldorf (DE)
(74) Vertreter: Grättinger, Günter
(86) Internationale Anmeldenummer: PCT/EP1999/006134
(87) Internationale Veröffentlichungsnummer: WO 2000/019852

(56) Entgegenhaltungen:
- GB-A- 641 316
- GB-A- 860 352
- GB-A- 861 382
- US-A- 4 524 482

## Beschreibung

Die Erfindung betrifft Gepäckbehälter gemäß dem Oberbegriff von Patentanspruch 1.

Eine derartige Rollenanordnung an einem Gepäckbehälter, wie beispielsweise in GB 2304095 A oder US-A 4524482 beschrieben, ist besonders verbreitet bei Hartschalenkoffern, aber zunehmend auch an Gepäckstücken von Handgepäckformat wie beispielsweise den üblichen Trolleys. Letztere besitzen zu diesem Zweck ausgesteifte Eckbereiche, in welchen Rollen gelagert sind, deren Laufflächen über entsprechende Rollengehäuse in den Eckbereichen hinausragen, so daß sie jedenfalls dann Bodenkontakt erhalten, wenn das Gepäckstück in die zum Schleppen geeignete Fahrposition gekippt wird.

Bei einer aus GB 860352 A bekannten Rollenanordnung ist eine Rolle an einer Schwinge schwenkbar gelagert, die gegen ein Elastomerkissen im Inneren eines Rollengehäuses gedämpft abgestützt ist.

Bekannte Rollenanordnungen haben den Nachteil, daß sie durch Bodenunebenheiten verursachte Stöße ungenügend gedämpft auf den Gepäckbehälter übertragen, zumal die Lauffläche der Rollen in der Regel durch einen Radring aus einem verhältnismäßig hartem Elastomer gebildet ist. Bei schwer beladenen Gepäckbehältern besteht daher auch schon nach kurzer Gebrauchszeit die Gefahr, daß der Radring zerstört wird, was hohe Reparaturkosten verursacht, da ein einfaches Auswechseln der Rollen durch den Benutzer zumeist nicht möglich ist.

Demgegenüber liegt der vorliegenden Erfindung die Aufgabe zugrunde, eine Rollenanordnung zu schaffen, welche nicht nur eine längere Lebensdauer aufweist als die bekannten Rollenanordnungen, sondern darüber hinaus noch zur Verbesserung des Rollkomforts beim Fahren des Gepäckbehälters beiträgt.

Diese Aufgabe wird mit den Merkmalen gemäß dem Kennzeichen von Patentanspruch 1 gelöst. Dabei ist von besonderer Bedeutung, daß die Rollen in dem jeweiligen Rollengehäuse nicht direkt, sondern über eine Schwinge gelagert sind, deren Bewegungen wiederum durch ein oder mehrere Elastomerkissen bzw. konkrete Elastomerpuffer gedämpft sind. Zu diesem Zweck sind in geeigneter Anordnung zwischen Schwinge und Gehäuse derartige Elastomerkissen bzw. Elastomerpuffer als Dämpfungselemente vorgesehen. Dabei ist von besonderem Vorteil, daß Dämpfungselemente, bezogen auf die Schlepposition des Gepäckbehälters, sowohl oberhalb als auch unterhalb der Schwinge angeordnet sind. Auf diese Weise können vertikale Stöße wirksam gedämpft werden, wobei es insbesondere auf die vertikalen Komponenten bei der Stoßdämpfung ankommt.

Durch das weiche Abfedern der Schwinge ergibt sich außerdem eine erwünschte Geräuschdämpfung, d.h. es werden insbesondere die durch Fugen des Bodenbelags verursachten Schläge gedämpft.

Im Rahmen der Erfindung können Elastomerkissen bzw. Elastomerpuffer mit unterschiedlicher Weichheit bzw. Nachgiebigkeit gewählt werden; z.B. kann ein oben rückwärts angeordneter Puffer, auf welchem das Gesamtgewicht des Gepäckstücks im wesentlichen auflastet, verhältnismäßig weich, dagegen ein unterer, auf der Vorderseite der Schwinge angeordneter Puffer zur Begrenzung der Schwingungsamplitude nach unten verhältnismäßig steif ausgebildet sein.

Im folgenden werden Ausführungsbeispiele der Erfindung anhand der Zeichnung erläutert. Es zeigt:
- Fig. 1: eine Rollenanordnung mit nur einer Rolle,
- Fig. 2: die Rollenanordnung gemäß Fig. 1 in der Seitenansicht,
- Fig. 3: eine Rollenanordnung mit einer Doppelrolle,
- Fig. 4: die Rollenanordnung gemäß Fig. 3 in der Seitenansicht,
- Fig. 5: eine Rollenanordnung in der Seitenansicht, bei welcher eine Schraubenfeder zwischen Gepäckbehälter und Rolle angeordnet ist und
- Fig. 6: eine weitere Rollenanordnung in der Seitenansicht.

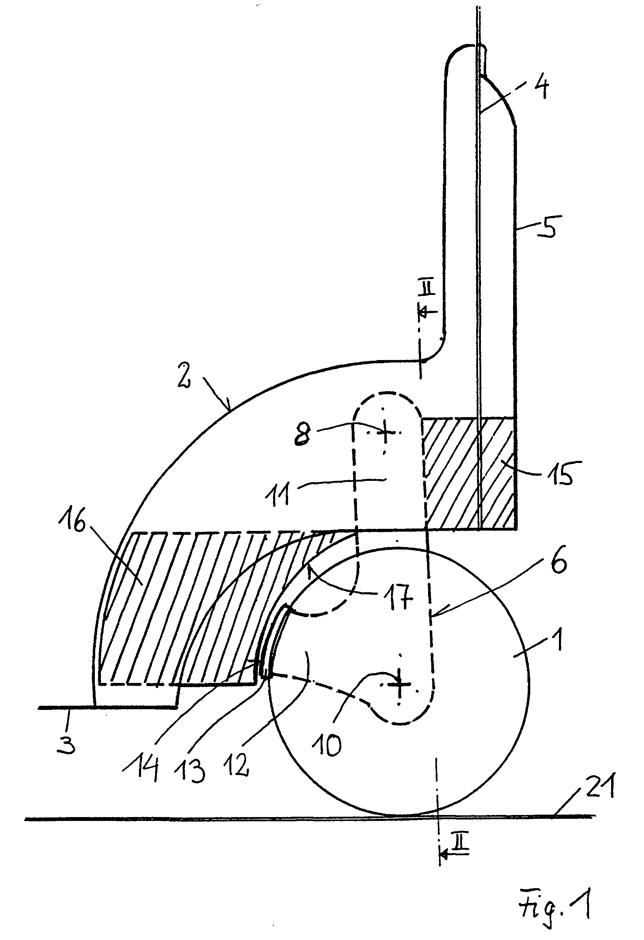

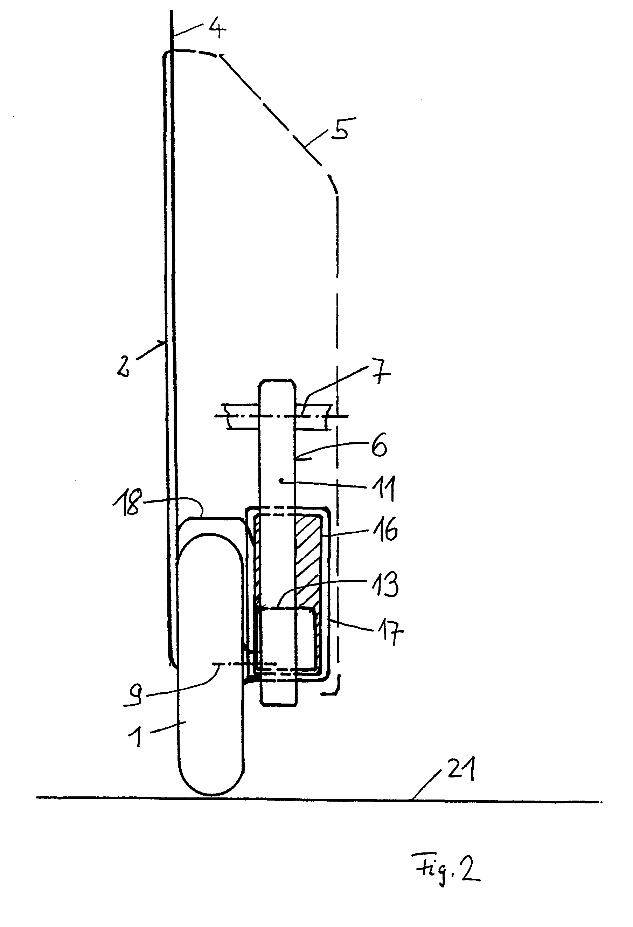

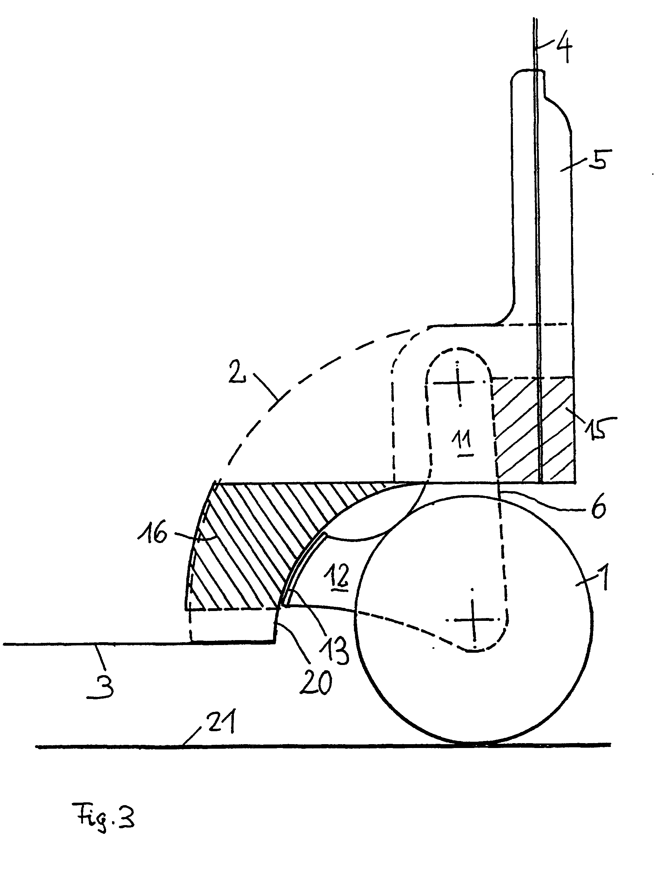

In den Fig. 1 und 2 ist eine Rollenanordnung mit nur einer Rolle 1 dargestellt. Die Rolle 1 ist innerhalb eines Rollengehäuses 2, z.B. aus Metall oder einem harten Kunststoff gelagert, welches in den zugeordneten Eckbereich des Gepäckbehälters eingearbeitet ist. Die Kontur des Gepäckbehälters ist lediglich mit abgebrochenen Linien 3 für die bodenparallele und 4 für die senkrechte Kontur angedeutet. Ein stirnseitiges Deckelteil 5 des Rollengehäuses 2 erleichtert die Montage und dient der Stoßsicherung.

Im Inneren des Rollengehäuses 2 ist eine Schwinge 6 im Bereich ihres oberen Endes um eine Achse 7 schwenkbar gelagert, welche in Fig. 1 als Lagerpunkt 8 dargestellt ist. Die Rolle 1 wiederum ist im Bereich des unteren Endes der Schwinge 6 an dieser um eine Achse 9 drehbar gelagert, welche in Fig. 1 als Lagerpunkt 10 dargestellt ist.

Die Schwinge 6 beschreibt im wesentlichen einen Schwenkarm 11 mit den beiden Lagerpunkten 8, 10 sowie eine am freien Ende des Schwenkarms 11 angesetzte Stütze 12, welche zum Inneren des Rollengehäuses 2 hin weisend vom Stützarm abgezweigt ist. Die Stütze 12 trägt an ihrem freien Ende außerhalb des Umfangs der Rolle 1 eine Stützplatte 13, an welcher eine Anschlagfläche 14 ausgebildet ist.

Zur Bewegungsbegrenzung und Abstützung der Schwenkbewegung der Schwinge 6 und damit der Rolle 1 dienen zwei Elastomerpuffer, welche im Inneren des Rollengehäuses 2 befestigt sind. Ein vorderer bzw. oberer Elastomerpuffer 15 ist benachbart des oberen Lagerpunkts 8 zwischen dem Schwenkarm 11 der Schwinge und dem Gehäusedeckel 5 angeordnet. Dieser Elastomerpuffer 15, welcher bevorzugt aus verhältnismäßig hartelastischem Werkstoff besteht, begrenzt die Schwenkbewegung der Schwinge in Gegenuhrzeigersinn. Für die Laufruhe des Gepäckbehälters kommt es dabei wesentlich auf die Dämpfungseigenschaften des oberen Elastomerpuffers 15 an.

Bezüglich des Schwenkarms 11 ist ein weiterer Elastomerpuffer 16 rückseitig angeordnet, so daß auf diesem Elastomerpuffer 16 das Gewicht des Gepäckbehälters im wesentlichen auflastet, wenn sich dieser in der nach vorne geneigten Schlepposition befindet. Da dieser untere Elastomerpuffer mit seiner der Rolle 1 zugewandten Innenfläche 17 an der Anschlagfläche 14 der Stütze 12 aufliegt, wird zweckmäßig ein elastomerer Werkstoff gewählt, welcher verglichen mit dem oberen Elastomerpuffer etwas weicher auf Lastwechsel anspricht, so daß durch Bodenunebenheiten beim Schleppen des Gepäckbehälters verursachte Stöße verhältnismäßig weich nach oben hin abgefedert werden.

Die Elastomerpuffer sind in den Figuren der Zeichnung jeweils schraffiert dargestellt, was lediglich deren Verdeutlichung dienen soll, also keinesfalls als Schnittdarstellung zu betrachten ist.

In Fig. 2 ist der obere Elastomerpuffer 15 aus Gründen der Übersichtlichkeit weggelassen. Dargestellt ist jedoch ein Gehäusehohlraum 17, in welchem der untere Elastomerpuffer 16 aufgenommen ist, sowie ein Gehäusehohlraum 18 für die Rolle 1. In diesem Sinne entspricht die Darstellung gemäß Fig. 2 etwa einem Schnittverlauf gemäß Linie II-II der Fig. 1.

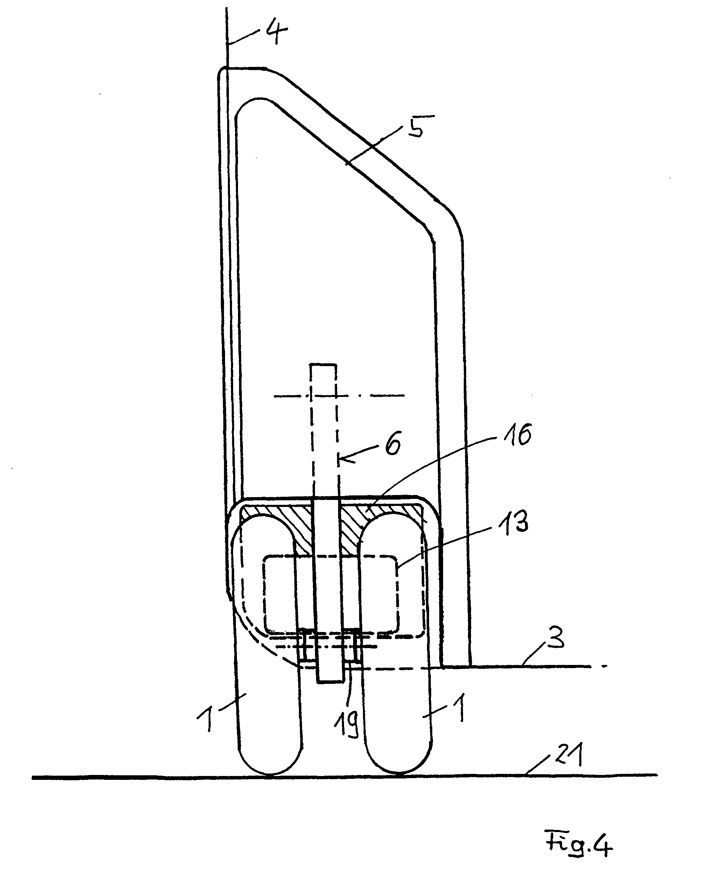

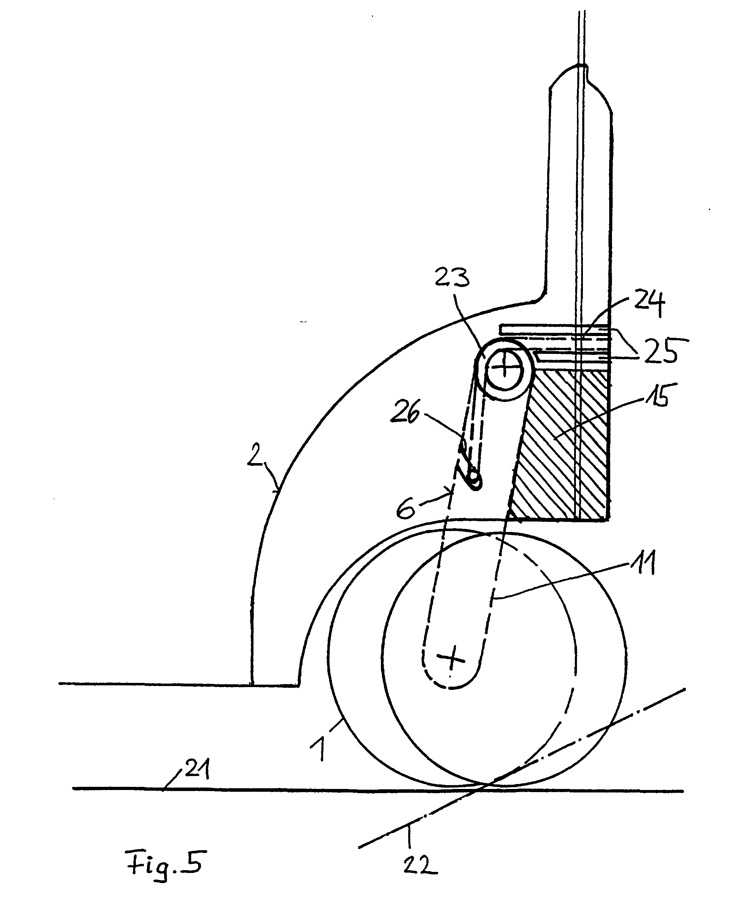

Die Ausführungsform gemäß den Fig. 3 und 4 unterscheidet sich von der vorstehend beschriebenen im wesentlichen durch die Anordnung zweier Rollen 1, welche über Lagerachsen 19 drehbar an der Schwinge 6 gelagert sind. Außerdem ist der untere Elastomerpuffer 16 gegenüber der Ausführungsform nach den Fig. 1 und 2 derart verkleinert ausgebildet, daß er innerhalb der der Rolle 1 zugewandten Innenkontur 20 des Rollengehäuses 2 Platz findet. Dementsprechend ist die Stütze 12 nach hinten verlängert.

Gemäß Fig. 4 erkennt man, daß die Schwinge 6 in der Mitte zwischen den beiden Rollen 1 angeordnet ist und daß die Stützplatte 13 symmetrisch an der Stütze 12 befestigt ist.

Bei den Ausführungsbeispielen gemäß den Fig. 1 bis 4 ist der Gepäckbehälter jeweils in der vertikalen Ruheposition bezüglich der Bodenoberfläche 21 dargestellt. In der Schlepposition wird demgegenüber der Gepäckbehälter um die Rollen im Uhrzeigersinn nach vorne gekippt. Eine derartige Darstellung bietet Fig. 5, bei welcher die Rolle 1 in der vorderen Ruheposition und in der hinteren Schlepposition eingezeichnet ist. Für die hintere Schlepposition muß man sich den Verlauf der Bodenfläche gemäß der strichpunktierten Linie 22 vorstellen. Dieser Schlepposition entspricht auch die Schwenklage der Schwinge 6, an welcher die Rolle 1 entsprechend der gezeichneten Schlepposition des Gepäckbehälters gezeichnet ist.

Bei der Ausführungsform gemäß Fig. 5, welche eine Schwinge 6 in Form eines einfachen Schwenkarms 11 zeigt, ist außerdem der untere Elastomerpuffer weggelassen. An seine Stelle tritt eine Schraubenfeder 23, welche auf die obere Lagerachse des Schwenkarms 11 aufgesteckt ist und mit einem Ende 24 zwischen Rippen 25 des Rollengehäuses und mit einem anderen Ende in einer Nut 26 des Schwenkarms 11 abgestützt ist, so daß durch die Schraubenfeder 23 der Schwenkarm gegen den Uhrzeigersinn vorgespannt ist.

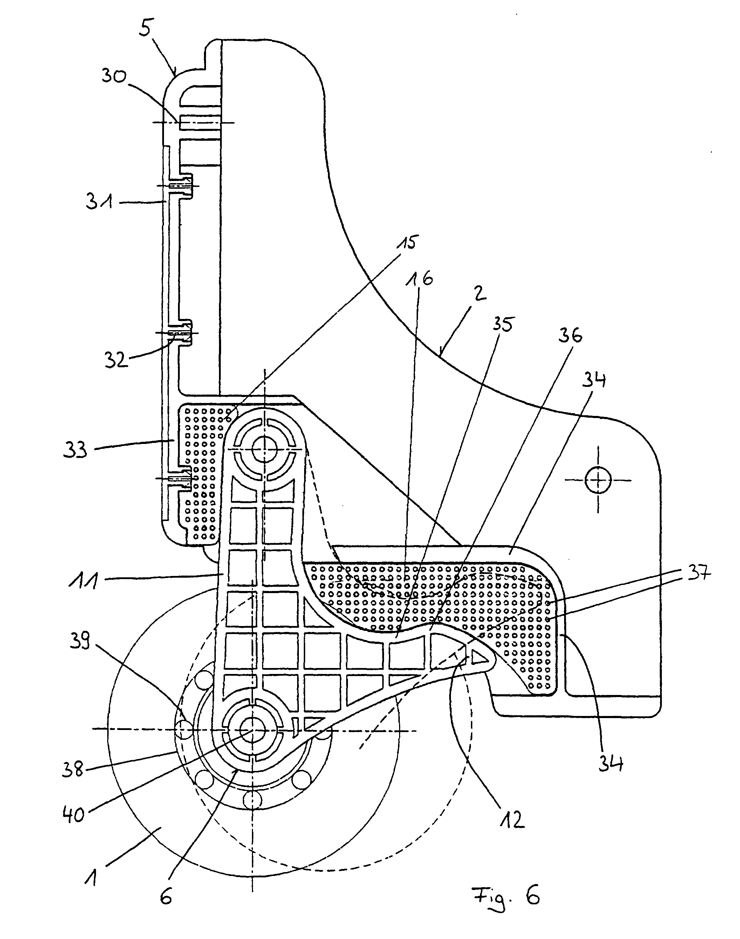

Fig. 6 zeigt eine Rollenanordnung in einer bevorzugten für die Serienproduktion vorgesehenen Ausführungsform. Das Rollengehäuse 2 besitzt ein stirnseitiges Deckelteil 5, welches über eine Schraubverbindung bei 30 befestigt ist. Eine längliche, vertikal verlaufende Gehäuseöffnung im Deckelteil 5 ist durch eine Deckelleiste 31 abgedeckt, welche mittels drei seitlich ausfedernder Ankerteile 32 am Deckelteil 5 befestigt ist. Die Deckelleiste 31 dient insbesondere als Träger eines Logos bzw. der jeweiligen Marke, unter welcher das fertige Gepäckstück vermarktet wird.

An der Unterseite des Rollengehäuses 2 befindet sich ein erster Elastomerpuffer 15, welcher am oberen Ende des Schwenkarms 11 der Schwinge 6 anliegt und gegen eine Frontplatte 33 des Deckelteils 5 abgestützt ist. Ein zweiter Elastomerpuffer 16 ist oberhalb der Stütze 12 der Schwinge 6 angeordnet und füllt im übrigen einen Hohlraum oberhalb der Stütze 12 aus, der zwischen dieser und einer unteren, winkelförmig verlaufenden Gehäusewand 34 des Rollengehäuses 2 gebildet ist. Der zweite Elastomerpuffer 16 besitzt entsprechend dem Verlauf der Oberseite 35 der Stütze 12 eine etwa S-förmige Kontur, welche im wesentlichen in die Horizontale gekippt ist.

In Fig. 6 ist mittels strichlierter Linien noch die entgegen dem Uhrzeigersinn aufgekippte Position der Schwinge 6 eingezeichnet, welche sie einnimmt, wenn das Gepäckstück vom Benutzer gezogen wird. Dabei wirkt sich die infolge der S-Form gebildete Aufwölbung 36 der Oberseite 35 der Stütze 12 besonders vorteilhaft aus, weil dadurch eine Relativbewegung zwischen Stütze 12 und dem zweiten Elastomerpuffer 16 vermieden wird, d. h. der Elastomerpuffer 16 wird praktisch nur auf Druck belastet. Dadurch, daß die Elastomerpuffer 15, 16 als gelochte Elastomerblöcke ausgebildet sind, wird deren Verformung unter Kompression erleichtert, was gleichzeitig deren Standzeit verlängert. Beide Elastomerpuffer 15, 16 besitzen, wie in der Zeichnung dargestellt, zahlreiche parallele Durchbohrungen 37, welche quer zur Belastungsrichtung verlaufen und zur Seite hin offen sind.

Zur Rolle 1 ist noch die Nabe 38 ohne zugehörige Abdeckung gezeichnet. Die Bohrungen 39 dienen zum Einpressen von Haltebolzen einer entsprechenden Nabenabdeckung. Die Rolle 1 besteht bevorzugt aus zwei Rollenkörpern, welche dicht nebeneinander um die Achse 40 gelagert sind, wodurch eine hohe Belastbarkeit gewährleistet ist.

## Patentansprüche

1. Gepäckbehälter mit Rollenanordnung zum Fahren, nämlich Koffer, Trolleys oder dergleichen, wobei eine oder mehrere Rollen (1) jeweils in einem Eckbereich der bodennahen Behälterkante in einem die Ecke aussteifenden Rollengehäuse (2) gelagert sind und wobei in dem Rollengehäuse (2) ferner eine Schwinge (6) verschwenkbar gelagert ist, an welcher mit Entfernung von ihrer Lagerstelle (8) wenigstens eine Rolle (1) gelagert ist,
**dadurch gekennzeichnet,**
**daß** die Schwinge (6) in beiden Schwenkrichtungen durch ein oder mehrere Elastomerkissen gedämpft abgestützt ist.

2. Gepäckbehälter nach Anspruch 1,
**dadurch gekennzeichnet,**
**daß** die Schwinge (6) im wesentlichen in einem Elastomerkissen eingebettet ist.

3. Gepäckbehälter nach Anspruch 2,
**dadurch gekennzeichnet,**
**daß** nur das freie Ende der Schwinge (6) in einem Elastomerkissen eingebettet ist.

4. Gepäckbehälter nach Anspruch 1,
**dadurch gekennzeichnet,**
**daß** die Schwinge (6) an einer oder mehreren Stellen gegenüber dem Rollengehäuse (2) durch ein oder mehrere Elastomerkissen abgestützt ist.

5. Gepäckbehälter nach Anspruch 4,
**dadurch gekennzeichnet,**
**daß** die Schwinge (6) einen mit seinem oberen Ende im Rollengehäuse gelagerten Schwenkarm (11) aufweist, und
**daß** am freien Ende des Schwenkarms (11) eine Stütze (12) ausgebildet ist, deren freies Ende gegen ein Elastomerkissen abgestützt ist.

6. Gepäckbehälter nach Anspruch 5,
**dadurch gekennzeichnet,**
**daß** das freie Ende der Stütze (12) mit einer Anschlagfläche (14) außerhalb des Rollenumfangs endet, welche gegen die Oberfläche des Elastomerkissens weist.

7. Gepäckbehälter nach Anspruch 6,
**dadurch gekennzeichnet,**
**daß** die Anschlagfläche (14) in der Ausgangsstellung der Schwinge (6) im wesentlichen gegen die Fahrtrichtung weist.

8. Gepäckbehälter nach Anspruch 7,
**dadurch gekennzeichnet,**
**daß** die Anschlagfläche (14) einen schräg nach oben gewölbten Abschnitt aufweist, an den sich eine Rundung in Richtung der Schwenkachse (40) des Schwenkarms (11) anschließt.

9. Gepäckbehälter nach Anspruch 8,
**dadurch gekennzeichnet,**
**daß** die Anschlagfläche (14) mit ihrem gewölbten Abschnitt in eine entsprechend hohl geformte Vertiefung des Elastomerkissens eingreift.

10. Gepäckbehälter nach Anspruch 1,
**dadurch gekennzeichnet,**
**daß** die Schwinge (6) durch zwei Elastomerpuffer (15, 16) abgestützt ist, wobei ein erster (15) benachbart deren Lagerung zwischen Schwinge (6) und einem in Fahrtrichtung vorne vorgesehenen Gehäuseteil, der zweite (16) benachbart dem freien Ende der Schwinge (6) in einem entgegen der Fahrtrichtung vorgesehenen Gehäuseteil angeordnet ist.

11. Gepäckbehälter nach Anspruch 10,
**dadurch gekennzeichnet,**
**daß** der erste Elastomerpuffer (15) zwischen Schwenkarm (11) und dem frontseitigen Rollengehäuse, der zweite Elastomerpuffer (16) zwischen Stütze (12) und dem rückseitigen Rollengehäuse angeordnet ist.

12. Gepäckbehälter nach Anspruch 10,
**dadurch gekennzeichnet,**
**daß** der zweite Elastomerpuffer (16) im wesentlichen die vertikalen Stöße beim Fahren des dabei entsprechend gekippten Gepäckbehälters aufnimmt, während der erste Elastomerpuffer (15) der Dämpfung der Schwinge (6) gegenüber dem Rollengehäuse (2) dient.

13. Gepäckbehälter nach Anspruch 10,
**dadurch gekennzeichnet,**
**daß** die Elastomerpuffer als Kunstgummiblöcke ausgebildet sind, welche zahlreiche zueinander parallele Durchbohrungen aufweisen, die quer zur Belastungsrichtung der Elastomerpuffer verlaufen.

## Claims

1. Baggage container with roller arrangement for travel, namely, suitcases, trolley cases or similar, in which one or more rollers (1) each run on bearings in a comer area of the edge of the container closest to the floor in a roller housing (2) which stiffens the comer and in which there is also an oscillating crank (6) gimballing on bearings in the roller housing (2) and on said crank, at a distance from its bearing point (8), at least one roller (1) is running on bearings,
**characterised in that**
the oscillating crank (6), in both directions of pivot, is damped by the support of one or more elastomer cushions.

2. Baggage container according to claim 1,
**characterised in that**
the oscillating crank (6) is essentially embedded in an elastomer cushion.

3. Baggage container according to claim 2,
**characterised in that**
only the free end of the oscillating crank (6) is embedded in an elastomer cushion.

4. Baggage container according to claim 1,
**characterised in that**
the oscillating crank (6) is supported at one or more points with respect to the roller housing (2) by one or more elastomer cushions.

5. Baggage container according to claim 4,
**characterised in that**
the oscillating crank (6) displays a pivoting arm (11) with its upper end running on bearings in the roller housing, and
that on the free end of the pivot arm (11) there is formed a stay (12), the free end of which is supported against an elastomer cushion.

6. Baggage container according to claim 5,
**characterised in that**
the free end of the stay (12) ends with a stop face (14) outside the roller perimeter, which points towards the surface of the elastomer cushion.

7. Baggage container according to claim 6,
**characterised in that**
the stop face (14) in the initial position of the oscillating crank (6) essentially points counter to the direction of travel.

8. Baggage container according to claim 6,
**characterised in that**
the stop face (14) displays a section arching upwards, on which a rounding in the direction of the pivot axis (40) of the pivot arm (11) abuts.

9. Baggage container according to claim 8,
**characterised in that**
the stop face (14) with its arched section engages in a corresponding hollow shaped indentation of the elastomer cushion.

10. Baggage container according to claim 1,
**characterised in that**,
the oscillating crank (6) is supported by two elastomer buffers (15, 16) where a first (15) is arranged adjacent to its bearing between the oscillating crank (6) and a housing part provided in the front direction of movement, the second (16) being arranged adjacent to the free end of the oscillating crank (6) in a housing part arranged counter to the direction of movement.

11. Baggage container according to claim 10,
**characterised in that**
the first elastomer buffer (15) is arranged between pivot arm (11) and the front-side roller housing, the second elastomer buffer (16) being arranged between stay (12) and the back side roller housing.

12. Baggage container according to claim 10,
**characterised in that**
the second elastomer buffer (16) essentially absorbs the vertical shocks when moving the baggage container which is correspondingly tipped at that time, while the first elastomer buffer (15) serves to damp the oscillating crank (6) against the roller housing (2).

13. Baggage container according to claim 10,
**characterised in that**
the elastomer buffers are designed as synthetic rubber blocks, which display numerous boreholes parallel to each other, which run transverse to the direction of loading of the elastomer buffers.

## Revendications

1. Bagage pourvu d'un système de roulettes pour son déplacement, à savoir valise, chariot ou similaire, une ou plusieurs roulette(s) (1) étant montée(s) dans la région d'un angle de l'arête de bagage proche du sol, dans un boîtier de roulette (2) qui rigidifie l'angle, et une platine oscillante (6) étant montée avec possibilité de pivotement à l'intérieur dudit boîtier à roulette (2), platine oscillante sur laquelle au moins une roulette (1) est montée à une certaine distance du point d'articulation (8) de la platine oscillante, **caractérisé en ce que** la platine oscillante (6) est supportée avec amortissement dans les deux directions par un ou plusieurs coussins en élastomère.

2. Bagage selon la revendication 1, **caractérisé en ce que** la platine oscillante (6) est essentiellement noyée dans un coussin en élastomère.

3. Bagage selon la revendication 2, **caractérisé en ce que** seule l'extrémité libre de la platine oscillante (6) est noyée dans un coussin en élastomère.

4. Bagage selon la revendication 1, **caractérisé en ce que** la platine oscillante (6) est supportée en un ou plusieurs points vis-à-vis du boîtier de roulette (2) par un ou plusieurs coussin(s) en élastomère.

5. Bagage selon la revendication 4, **caractérisé en ce que** la platine oscillante (6) présente un bras pivotant (11) qui est monté par son extrémité supérieure dans le boîtier de roulette et **en ce qu'**à l'extrémité libre du bras pivotant (11) est aménagé un élément d'appui (12), dont l'extrémité libre repose sur un coussin en élastomère.

6. Bagage selon la revendication 5, **caractérisé en ce que** l'extrémité libre de l'élément d'appui (12) se termine par une surface de butée (14) qui est située à l'extérieur de la circonférence de la roulette et est tournée vers la surface du coussin en élastomère.

7. Bagage selon la revendication 6, **caractérisé en ce que** la surface de butée (14), dans la position d'origine de la platine oscillante (6), est orientée essentiellement dans la direction de déplacement.

8. Bagage selon la revendication 7, **caractérisé en ce que** la surface de butée (14) présente une portion courbe, qui s'étend en biais vers le haut, à laquelle succède un arrondi dans la direction de l'axe de pivotement (40) du bras pivotant (11).

9. Bagage selon la revendication 8, **caractérisé en ce que** la surface de butée (14) s'engage avec sa portion courbe dans une cavité de conformation adaptée du coussin en élastomère.

10. Bagage selon la revendication 1, **caractérisé en ce que** la platine oscillante (6) est supportée par deux coussins en élastomère (15, 16), un premier coussin (15) étant disposé dans le voisinage de son articulation entre la platine oscillante (6) et une partie de boîtier prévue à l'avant, vu dans la direction de déplacement, le second coussin (16) étant disposé dans le voisinage de l'extrémité libre de la platine oscillante (6) dans une partie de boîtier prévue dans la direction opposée à la direction de déplacement.

11. Bagage selon la revendication 10, **caractérisé en ce que** le premier coussin en élastomère (15) est disposé entre le bras pivotant (11) et le boîtier de roulette antérieur, et le second coussin en élastomère (16) est disposé entre l'élément d'appui (12) et le boîtier de roulette postérieur.

12. Bagage selon la revendication 10, **caractérisé en ce que** le second coussin en élastomère (16) absorbe essentiellement les chocs verticaux lors du déplacement, tandis que le premier coussin en élastomère (15) sert à l'amortissement de la platine oscillante (6) vis-à-vis du boîtier de roulette (2).

13. Bagage selon la revendication 10, **caractérisé en ce que** les coussins en élastomère sont réalisés sous la forme de blocs de caoutchouc synthétique qui comportent un grand nombre de trous débouchants mutuellement parallèles qui s'étendent transversalement à la direction de charge des plots en élastomère.
